# EUROPEAN PATENT SPECIFICATION

(11) **EP 4 457 262 B1**
(45) Date of publication and mention of the grant of the patent: **28.05.2025**
(21) Application number: 22839901.0
(22) Date of filing: 28.12.2022
(51) Int. Cl.: C08G 59/68, C08G 59/60, C08G 59/56

(54) **FAST CURABLE CRASH RESISTANT ADHESIVE COMPOSITION**
SCHNELLHÄRTENDE STOSSFESTE KLEBSTOFFZUSAMMENSETZUNG
COMPOSITION ADHÉSIVE RÉSISTANT À LA COLLISION POUVANT DURCIR RAPIDEMENT

(30) Priority: 30.12.2021 EP 21218242
(43) Date of publication of application: 06.11.2024
(73) Proprietor: 3M Innovative Properties Company, Saint Paul, Minnesota 55133-3427 (US)
(72) Inventor: REICHINGER, Melanie, 41453 Neuss (DE); KAHRAU, Anna, 41453 Neuss (DE); KREBS, Ralf, 41453 Neuss (DE); GOLLNICK, Hans-Emanuel, 41453 Neuss (DE)
(74) Representative: Bergen, Katja
(86) International application number: PCT/IB2022/062852
(87) International publication number: WO 2023/126860

(56) References cited:
- EP-A1- 3 670 564
- EP-A1- 3 771 721
- US-A1- 2017 107 409

## Description

### Technical Field

The disclosure relates to curable two-part adhesive-composition precursors and the adhesive compositions obtained therefrom. Further, the present disclosure further relates to a method for adhesively connecting parts. Moreover, the present disclosure further relates to a use of the curable adhesive compositions and its precursors as described herein in industrial manufacturing and assembly operations, for example in body-in-white processes in the automotive industry.

### Background

Metal joints in vehicles may be formed through the use of an adhesive. For example, an adhesive may be used to bond a metal panel, for example a roof panel to the support structure or chassis of the vehicle. Further, an adhesive may be used in joining two metal panels of a vehicle closure panel. Vehicle closure panels typically comprise an assembly of an outer and an inner metal panel whereby a hem structure is formed by folding an edge of an outer panel over an edge of the inner panel. Typically, an adhesive is provided there between to bond the panels together. Further, a sealant typically needs to be applied at the joint of the metal panels to provide for sufficient corrosion resistance. For example, US 6,000,118 discloses the use of a flowable sealant bead between the facing surfaces of the two panels, and a thin film of uncured paint-like resin between a flange on the outer panel and the exposed surface of the inner panel. The paint film is cured to a solid impervious condition by a baking operation performed on the completed door panel. US 6,368,008 discloses the use of an adhesive for securing two metal panels together. The edge of the joint is further sealed by a metal coating. WO 2009/071269 discloses an expandable epoxy paste adhesive as a sealant for a hem flange. A further hemmed structure is disclosed in US 6,528,176. EP3670564A1 discloses a curable two-part adhesive compositions precursor and the adhesive compositions obtained therefrom.

Further efforts have been undertaken to develop adhesive compositions whereby two metal panels, in particular an outer and an inner panel of a vehicle closure panel, could be joined with an adhesive without the need for a further material for sealing the joint. Thus, it became desirable to develop adhesive systems that provide adequate bonding while also sealing the joint and providing corrosion resistance. A partial solution has been described in e.g. WO 2007/014039, which discloses a thermally expandable and curable epoxy-based precursor of an expanded thermoset film toughened foamed film comprising a mixture of solid and liquid epoxy resins, and claimed to provide both favourable energy absorbing properties and gap filling properties upon curing. Another partial solution has been described in WO 2011/141148, which describes a heat activated structural adhesive that is solid and dry to the touch at ambient temperature, that can be activated to develop adhesive properties at an elevated temperature and which can be moulded without curing.

Presently, in automotive industry classical joining techniques such as welding and riveting are considerably broadened by use of structural adhesives. In this regard, examples are closures like doors and hoods usually made of aluminium and/or steel substrates, i.e. metal plates or parts. While handling and using adhesives in these processes are increasingly well understood, challenges remain. In particular, challenges arise from the fact that the metal substrates are usually coated with oil or lubricants for e.g. stamping processes. Further challenges arise from the necessity of corrosion prevention. That means that in some situations metal substrates are already coated with corrosion prevention agents, and the adhesive is expected to be compatible with this coating. In other situations, metal substrates are pre-assembled, sometimes including the incorporation of the adhesive, and are then coated with corrosion prevention agents. A commonly used process in automotive industry includes such a scenario, i.e. combining adhesive and optionally oiled or lubricated metal parts into one assembly, optionally forming, bending or partially welding the assembly, and then coating this assembly. Coating with corrosion protection agents may be carried out by means of electro-coating (or e-coat) by dipping the assembly into the e-coat bath and applying a certain voltage. Curing of the adhesive takes then usually place upon curing the e-coat in an oven.

In addition, it is often necessary to achieve a certain handling strength of the adhesive in the metal part assembly in a certain process time, so that the assembly may be moved to the next step in commonly used process lines. This may be achieved by fast local spot induction curing of the bond line. This induction curing step may be also necessary to harden the bond line up to a certain extent such that the adhesive will not be washed out during a subsequent washing step usually carried out in such manufacturing processes prior or e-coating. However, this induction curing step was found that it may lead to panel distortion, in particular when temperatures exceed certain levels. This may even be aggravated in hybrid applications where different metals are being assembled together, e.g. steel panels together with aluminium panels. Panel distortion is highly undesired since it gives rise to quality and often stability issues.

Another challenge in conjunction with body-in-white application in automotive industry is the so-called dwell time sensitivity. Dwell time is usually defined as the time after application of the adhesive onto the substrate until the final cure process commonly carried out in an e-coat oven. This period may vary between 24 hours to several weeks. In general, the shorter the dwell time, the better the adhesive performance. It is assumed that the reason for this is premature and slow curing building up. That is, during a long dwell time, the adhesive will continue to polymerize (i.e. to cure). The problem arising from this phenomenon is that no sufficient adhesive strength is achieved in the adhesive/metal surface, in particular when the metal is also covered at least partially with oil and/or grease.

While there are presently numerous examples of structural adhesives commercially available for manufacturing operations in automotive industry such as body-in-white applications, there still exists a need for improved adhesives exhibiting a combination of properties, such as improved oil/grease tolerance, low induction curing temperature, and decreased dwell time sensitivity.

### Summary

The present disclosure provides a curable adhesive composition precursor, comprising
a first part (A) comprising
   (i) at least one first epoxy curing agent selected from diamines;
   (ii) at least one second epoxy curing agent selected from phenalkamides and/or phenalkamines, which are different from the at least one first epoxy curing agent;
   (iii) at least one first curing aid selected from metal salt hydrates;
   (iv) at least one second curing aid selected from phenolic amines;
a second part (B) comprising
   (i) at least one epoxy resin;
   (ii) at least one first impact modifier;
   (iii) at least one second impact modifier different from the at least one first impact modifier;
   (iv) at least one amphoteric corrosion inhibitor selected from phosphonate compounds and phosphosilicate compounds.

The present disclosure further provides a curable adhesive composition, obtained by curing part (A) and part (B) of the curable adhesive composition precursor as described herein.

Also, the present disclosure relates to a method for bonding parts, comprising the following steps:
(a) Providing an adhesive as described herein;
(b) Applying the adhesive composition onto at least part of a surface of a first part;
(c) Applying a second part onto the adhesive composition applied to the first part;
(d) Performing a curing step to cure the adhesive composition as described herein such as to adhesively bond the first part and the second part.

Furthermore, the present disclosure relates to a use of the curable adhesive composition precursor as described herein or of the curable adhesive composition as described herein for bonding parts.

### Detailed Description

Before any embodiments of this disclosure are explained in detail, it is to be understood that the disclosure is not limited in its application to the details of construction and the arrangement of components set forth in the following description. The invention is capable of other embodiments and of being practiced or of being carried out in various ways. As used herein, the term "a", "an", and "the" are used interchangeably and mean one or more; and "and/or" is used to indicate one or both stated cases may occur, for example A and/or B includes, (A and B) and (A or B). Also herein, recitation of ranges by endpoints includes all numbers subsumed within that range (e.g., 1 to 10 includes 1.4, 1.9, 2.33, 5.75, 9.98, etc.). Also herein, recitation of "at least one" includes all numbers of one and greater (e.g., at least 2, at least 4, at least 6, at least 8, at least 10, at least 25, at least 50, at least 100, etc.). Also, it is to be understood that the phraseology and terminology used herein is for the purpose of description and should not be regarded as limiting. Contrary to the use of "consisting", which is meant to be limiting, the use of "including," "containing", "comprising," or "having" and variations thereof is meant to be not limiting and to encompass the items listed thereafter as well as additional items. Furthermore, it is understood that the term "comprise" as used herein may also embrace the term "consists of" in the sense of "consists only of", but in general is used according to its meaning generally used in the art. Hence, limiting down "comprise" to "consists of" or "comprising" to "consisting of" is fully embraced in the present disclosure.

Amounts of ingredients of a composition may be indicated by % by weight (or "% wt". or "wt.-%") unless specified otherwise. The amounts of all ingredients gives 100 % wt unless specified otherwise. If the amounts of ingredients is identified by % mole the amount of all ingredients gives 100% mole unless specified otherwise.

In the context of the present disclosure, the terms "room temperature" and "ambient temperature" are used interchangeably and refer to a temperature of 23 °C (± 2 °C) at ambient pressure condition of about 101 kPa.

Unless explicitly stated otherwise, all embodiments and optional features of the present disclosure can be combined freely.

The first aspect of the present disclosure is a curable adhesive composition precursor, comprising
a first part (A) comprising
   (i) at least one first epoxy curing agent selected from diamines;
   (ii) at least one second epoxy curing agent selected from phenalkamides and/or phenalkamines, which are different from the at least one first epoxy curing agent;
   (iii) at least one first curing aid selected from metal salt hydrates;
   (iv) at least one second curing aid selected from phenolic amines;
a second part (B) comprising
   (i) at least one epoxy resin;
   (ii) at least one first impact modifier;
   (iii) at least one second impact modifier different from the at least one first impact modifier;
   (iv) at least one amphoteric corrosion inhibitor selected from phosphonate compounds and phosphosilicate compounds.

Curable adhesive composition precursors as the one according to the present disclosure are also known as 2-component compositions or 2k-compositions. It is understood that the first part (A) is physically separated from the second part (B) of the curable adhesive composition precursor. The first part (A) and second part (B) are combined and therefore mixed before the intended use according to the user's needs so as to obtain a curable adhesive composition. The present disclosure also covers a curable adhesive composition, obtained from the curable adhesive composition precursor and a cured composition obtained from curing the curable adhesive composition. The use of these 2k-compositions offers several advantages such as a longer shelf-life, the possibility to form a curable composition according to the user's needs, and a readily curable composition which itself offers further handling advantages for the user, in particular in the technical field of bonding metal parts in the specific requirements commonly found in body-in-white processes in the automotive industry.

The curable adhesive composition precursor according to the present invention may exhibit at least one or even a combination of desirable properties such as good handling properties, fast curing times of the curable adhesive composition obtained therefrom, good mechanical strength of the cured composition and, in particular, improved oil/grease tolerance, low induction curing temperature, and very good moisture and corrosion resistance, in particular when one or both of the substrates to be bonded are not steel, for instance aluminium, of the curable composition obtained from the curable adhesive composition precursor as described herein. This combination of improved oil/grease tolerance, low induction temperature, and very good moisture and corrosion resistance as well as general good handling and adhesive properties make the composition according to the present disclosure highly suitable for applications in the automotive industry as described herein.

Epoxy curing agents suitable for use in the present disclosure are compounds which are capable of cross-linking (curing) the epoxy resin. Suitable curing agents according to the present invention may be primary or secondary amines. The epoxy curing agent system present in part (A) comprises two epoxy curing agents, a first epoxy curing agent and a second epoxy curing agent which is distinct (i.e. chemically different) from the first epoxy curing agent. The first epoxy curing agent is selected from diamines.

Without wishing to be bound by theory, it is believed that the diamine (i.e. the first epoxy curing agent) provides fast curing properties to the curable adhesive due its inherent high reactivity, while further providing excellent chemical resistance after curing with the epoxy resin.

**In** particular aspect, the diamine for use herein may comprise the general structure: 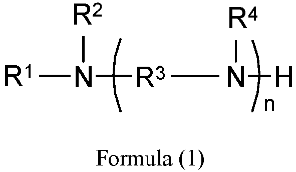 wherein
the residues R¹, R², and R⁴, independently from each other, may represent hydrogen or a hydrocarbon (such as an alkyl) or an alkoxy or a polyoxyalkyl residue containing about 1 to 15 carbon atoms;
R³ represents a polyether alkyl residue, preferably containing about 1 to 15 carbon atoms;
n represents any integer from 1 to 10.

The residues R¹, R², and R⁴ are chosen such that the amine contains two primary amine groups.

In a particular aspect, the diamine is a polyether amine having two primary amine moieties. The polyether amine may have from 1 to 12, or even from 1 to 6 catenary ether (oxygen) atoms.

In a preferred aspect, the first epoxy curing agent comprises at least one polyether amine derived from polypropylene oxide or polyethylene oxide. Exemplary polyether amines suitable for use herein are commercially available under the trade designation JEFFAMINE from Huntsman Chemicals, or TTD (4,7,10-trioxatridecane-1,13-diamine) commercially available, for example, from BASF, Ludwigshafen Germany.

Similarly, the diamine for use herein is preferably a polymeric diamine such as an amidoamine or polyamidoamine. The polyamidoamine may be branched or unbranched aromatic or branched or unbranched aliphatic. Preferably, the polyamidoamine is an aliphatic polyamidoamine. Polyamidoamines which may be advantageously used in the context of the present disclosure are obtained as described in [0010] to [0029] of EP 249527 A1.

The at least one diamine may be at least one of the above-mentioned diamines or may also comprise a mixture of at least two of those diamines. Part (A) of the curable adhesive composition precursor as described herein comprises the at least one diamine in an amount of from 10 to 75 wt.-%, preferably from 15 to 65 wt.-%, more preferably from 20 to 55 wt.-%.

Part (A) of the curable adhesive composition precursor further comprises at least one second epoxy curing agent different from the at least one first epoxy curing agent. Preferably, the at least one second epoxy curing agent is based on a phenolic lipid and is contained in part (A) of the curable adhesive composition precursor in an amount of from 10 to 50 wt.-%, preferably from 15 to 45 wt.-%, more preferably from 20 to 40 wt.-%, based on the total weight of part (A) of the curable adhesive composition precursor. The use of the epoxy curing agent based on a phenolic lipid has the advantage of an improved resistance of the cured adhesive obtained from the curable adhesive composition towards weathering and water. In other words, the cured adhesive obtained from the compositions according to the present disclosure may exhibit good resistance to water and weathering. This has the advantage that the compositions as described herein offer a corrosion resistance when applied on metal surfaces such as steel surfaces which is the case in most vehicle body parts. Furthermore, it was found that the presence of the at least one amine epoxy curing agent based on a phenolic lipid also greatly increased the tolerance of the adhesive towards oil and grease on metal surfaces. That is, adhesive performance such as peel strength or overlap shear strength is not greatly affected as it is the case with conventional adhesives.

Generally, the term "phenolic lipids" is used for a class of certain natural products composed of long aliphatic chains and phenolic rings. As used herein, this term describes compounds of either natural or preferably synthetic origin composed of long aliphatic chains and phenolic rings. The presence of the at least one phenolic lipid in the curable casting resin and its precursor may have the effect of improved flexibility of the resin compositions even at low temperatures and increased hydrophobicity also of the cured resin obtained therefrom. Preferably, the at least one phenolic lipid is selected from alkylcatechols, alkylphenols, alkylresorcinols and anacardic acids. More preferably, the at least one phenolic lipid is an alkylphenol selected from propylphenol, butylphenol, amylphenol, octylphenol, nonylphenol, dodecylphenol and cardanol-based compounds. An amine epoxy curing agent as described herein may be obtained from the phenolic lipid by means of a Mannich reaction with aldehydes (such as formaldehyde) and polyamines with phenolic lipids which introduces aminoalkyl groups to the phenolic ring. The at least one second epoxy curing agent based on a phenolic lipid is selected from phenalkamines and/or phenalkamides. Phenalkamines useful for the compositions as described herein are commercially available from, for example, Huntsman Corp. under the trade designation Cardolite, such as Cardolite NX5607 and the like. Phenalkamides useful for the compositions as described herein are commercially available from, for example, Huntsman Corp. under the trade designation Cardolite, such as Lite C3060 and the like.

Part (A) and optionally part (B) of the curable adhesive composition precursor according to the present disclosure may further comprise at least one inorganic filler material. Part (A) may comprise the at least one inorganic filler material in an amount of from 10 to 60 wt.-%, preferably from 15 to 55 wt.-%, more preferably from 20 to 45 wt.-%, based on the total weight of part (A) of the composition described herein. Similarly, part (B) may comprise the at least one inorganic filler material in an amount of from 2 to 40 wt.-%, preferably from 5 to 35 wt.-%, more preferably from 10 to 30 wt.-%, based on the total weight of part (B) of the composition as described herein. The inorganic filler material may have at least one advantageous effect such as reduced density of the composition, improved flow and/or workability of the compositions. Inorganic filler materials are preferred over organic filler materials since they do not compromise the compressive strength of the compositions. In general, any inorganic filler material known in the art may be used, i.e. silica fillers, glass, ceramics and the like.

Preferably, the at least one filler material comprises at least one silica compound. Silica compounds may have the effect of giving rise to improved flow, improved workability and increased of the compositions as described herein, without sacrificing mechanical strength or resistance to water and the like of the cured adhesives obtained therefrom. In this regard, it is preferred that the at least one silica compound is selected from fused silica, fumed silica, perlite, and any combinations and mixtures thereof. Silica compounds as described herein may preferably be employed in the form of silica particles. Preferably, the silica particles comprise fumed silica, preferably hydrophobically fumed silica, fused silica, amorphous silica particles, hollow silica particles, silica gels, calcium silicates, and any combinations thereof. Exemplary commercial fillers include SHIELDEX AC5 (a synthetic amorphous silica, calcium hydroxide mixture available from W.R. Grace in Columbia, MD, USA); CAB-O-SIL TS 720 (a hydrophobic fumed silica-treated with polydimethyl-siloxane-polymer available from Cabot GmbH in Hanau, Germany); AEROSIL VP-R-2935 (a hydrophobically fumed silica available from Degussa in Düsseldorf, Germany); AEROSIL R-202 (a hydrophobically fumed silica available from Evonik Industries, Germany); glass-beads class IV (250-300 microns): amorphous silica (available from 3M Deutschland GmbH in Neuss, Germany); MINSIL SF 20 (available from Minco Inc., 510 Midway, Tennessee, USA); amorphous, fused silica; and APYRAL 24 ESF (epoxysilane-functionalized (2 wt.-%) aluminium trihydrate available from Nabaltec GmbH in Schwandorf, Germany). Fused silica is available, for example, under the trade designation MINSIL from Minco Inc., Midway, USA.

It is further preferred that the at least one inorganic filler material in part (B), preferably also part (B), comprises inorganic beads. Inorganic beads or microspheres have the effect of yielding a certain control of the gap between the two parts adhesively connected by the adhesive compositions as described herein. Also, a reduced density of the compositions may also be achieved, which is sometimes desirable. In particular, microspheres have the capability of reducing the density of a composition, i.e. the density of a composition as described including the microspheres is lower than the density of a composition without the microspheres. Preferably, the inorganic microspheres are hollow inorganic microspheres due to an even further reduced density of the resulting compositions. The microspheres are preferably selected glass bubbles or ceramic bubbles. By way of example, microspheres may be selected from a variety of materials including glass, silica, ceramic (including sol-gel derived) or zirconia. The inorganic filler materials may have an average particle size typically of less than 500 µm, or between 10 and 100 µm. Preferred hollow inorganic microspheres include glass microspheres which are commercially available, for example, from 3M Company under the trade designation Glass bubbles D32, MICROBUBBLES or Scotchlite D32/4500. Similarly, preferred inorganic beads comprise glass beads as also commercially available from 3M Company.

The first part (A) of the curable adhesive composition precursor according to the present disclosure further comprises at least one first curing aid selected from metal salt hydrates. This may have the effect of an increased curing speed, which is very advantageous in many applications, in particular where it is desirable to obtain a stable adhesive bond between two substrates within a short period of time, or if lower temperatures for curing are desirable. Hence, using a metal salt hydrate may have the effect that curing, such as induction curing, may be achieved at lower temperatures.

Preferably, the metal in the metal salt hydrate is selected from the group consisting of alkali, earth alkali, rare earth metals, aluminium, preferably from alkali and earth alkali, more preferably from sodium, potassium, calcium, and magnesium, and even more preferably from calcium and sodium. The anion is preferably selected from nitrate, nitrite and organic acid anion, preferably thiosulfates and triflates, , of which nitrates and and thiosulfates are particularly preferred. Thiosulfates are strongly preferred. It was found that the combination of the secondary curative and the metal salt catalyst gives rise to an increase in curing speed. In this regard, metal salt catalyst selected from the group consisting of calcium nitrate, calcium triflate, aluminium nitrate, magnesium nitrate, lithium nitrate, lanthanum nitrate, and any combinations thereof is preferred. The use of calcium nitrate, magnesium nitrate, calcium triflate, sodium thiosulfate, potassium thiosulfate and any combinations thereof is particularly preferred. Without wanting to be bound to theory, it is believed that the metal salt hydrate thickens the material and therefore influences the viscosity of the part (A) of said curable adhesive composition precursor in a positive way. In particular, it was found that a thiosulfate, such as the preferred example sodium thiosulfate pentahydrate, yields a specifically advantageous combination of viscosity of curable adhesive composition, quick curing times even at room temperature, as well as good handling strength after only short curing times.

When present, the at least one metal salt catalyst is contained in part (A) of the compositions as described herein in an amount of from 0.1 to 15 wt.-%, preferably from 1 to 12 wt.-%, more preferably from 1.5 to 10 wt.-%, based on the total weight of part (A) of the curable adhesive composition precursor. Part (A) of the curable adhesive composition precursor as described herein further comprises at least one second curing aid selected from phenolic amines. In this regard, it may be desirable to include a tertiary phenolic amine in part (A) of the curable adhesive composition precursor according to the present disclosure. Without wishing to be bound by theory, it is believed that the metal nitrate hydrate provides further acceleration effect to the curing reaction and forms a reactive complex with the phenolic amine beneficially impacting the thixotropic properties of the curable adhesive composition. It is preferred that the phenolic amine is contained part (A) of the curable adhesive composition precursor as described herein in an amount of from 2 to 50 wt.-%, preferably from 3 to 40 wt.-%, and more preferably from 5 to 25 wt.-%, based on the total weight of part (A). In particular, the combination of calcium nitrate tetrahydrate, tris-2,4,6-(dimethylaminomethyl)-phenol with phenalkamide offers handling strength via curing by spot induction at 80 °C or after 4 hours at room temperature.

Part (B), of the compositions as described herein comprise at least one first impact modifier and at least one second impact modifier different from the at least one first impact modifier. This gives rise to the advantage of improved crash resistance of the cured adhesive bond over a broad range of temperatures. This is particularly important for automotive applications due to ever increasing demands to crash resistance of materials for the sake of passenger safety. Furthermore, a certain brittleness of the cured material at low temperatures may be avoided. In this regard, "different from the first impact modifier" means that the at least one second impact modifier is chemically or physically different from the at least one impact modifier. The at least one first and the at least one second impact modifier may independently be selected from the list of butadiene rubbers, nitrile rubbers, and core-shell rubbers. Preferably, the at least one first impact modifier is selected from the list of core-shell impact modifiers, preferably from core-shell rubbers. It is also preferred that the at least one second impact modifier is selected from core-shell impact modifiers and butadiene rubber impact modifiers, and any combinations and mixtures thereof. In a preferred example, the the at least one first impact modifier and the at least one second impact modifier may be selected from core shell impact modifiers, wherein the at least one second core shell modifier has a different particle size than the at least one first impact modifier and/or the at least one second impact modifier has a different T_{G} than the at least one first impact modifier. In another preferred example, the at least one first impact modifier is selected from core shell impact modifiers, and the at least one second impact modifier is selected from butadiene rubbers and/or nitrile rubbers.

Exemplary compounds which may be advantageously used as butadiene rubbers or nitrile rubbers are carboxyl-, amine-, epoxy-, hydroxyl- or methacrylate-terminated butadiene, butadiene styrene or butadiene acrylonitrile copolymers, preferably amine terminated butadiene styrene or butadiene acrylonitrile copolymers. Such impact modifiers are commercially available, for example, under the trade designations Hypro CTBN, ATBN, ETBN, HTB or VTBNX from CVC Thermoset Specialities and Hycar ATBN from Amerald Materials, or of the MX Series from Kaneka such as MX 257.

With regard to the core-shell rubber as impact modifier, any core-shell rubber impact modifier commonly known in the art may be used in the context of the present disclosure. In a typical embodiment, the core-shell rubber impact modifier is a composite material configured by materials where the core portion on the inside and the shell portion on the outside are mutually different. Herein, the term "different materials" refers to materials where the composition and/or properties are mutually different, and therefore includes materials where the same type of resins are used but the molecular weights are mutually different, and the like.

From the perspective of favourably achieving a toughening effect on the compositions as described herein, the Tg of the shell portion is preferably higher than the Tg of the core portion. In this case, while flexibility is provided to the cured epoxy adhesive because the core portion which has a relatively low Tg functions as a centralized point of stress, the shell portion suppresses unwanted agglomeration of the core-shell rubber, and thus the core-shell impact modifier can be uniformly dispersed in the compositions as described herein.

Examples of the core-shell rubber impact modifier include methyl methacrylate - butadiene copolymer, methyl methacrylate - butadiene - styrene copolymer, methyl methacrylate - acrylonitrile - butadiene - styrene copolymer, methyl methacrylate - acrylic rubber copolymer, methyl methacrylate - acrylic rubber - styrene copolymer, methyl methacrylate - acrylic butadiene rubber copolymer, methyl methacrylate - acrylic butadiene rubber - styrene copolymer, methyl methacrylate - (acrylic silicone IPN rubber) copolymer, and the like, but are not restricted thereto. Methyl methacrylate - butadiene copolymer, methyl methacrylate - butadiene - styrene copolymer, and methyl methacrylate - acrylic butadiene rubber - styrene copolymer can be advantageously used as the core-shell toughening agent.

The core-shell impact modifier is normally in the form of fine particles, and the average value (weight average particle diameter) of the primary particle diameter thereof is generally approximately 0.05 micrometers or higher or approximately 0.1 micrometers or higher to approximately 5 micrometers or lower or approximately 1 micrometers or lower.

Preferably, the core-shell rubber can be used in a state dispersed in a matrix. It is preferred that the matrix is an epoxy resin. A matrix with favourable affinity to either first or second epoxy resin as described herein is particularly preferable from the perspective of favourable dispersion of the core-shell rubber in the composition as described herein. Examples of the matrix can include epoxy resins (such as bisphenol A and the like).

The core-shell impact modifier can be a commercial product that is provided as a resin modifying agent or the like, and examples include BTA 751 (commercially available from Dow Chemical) as a methyl methacrylate-butadiene-styrene (MBS) type core-shell resin, MX-153 (commercially available from Kaneka) as a resin where methyl methacrylate-butadiene-styrene (MBS) dispersed in bisphenol A diglycidyl ether), and MC-257 (commercially available from Kaneka) as a butadiene core-shell resin, dispersed in epoxy, and F351 (commercially available from Aika Industries) as the acrylic core-shell resin, Paraloid 2650A (butadiene rubber), Hycar ATBN (CVC Chemicals, liquid butadiene rubber), and the like. Without wishing to be bound by theory, it is believed that the core-shell polymer rubber beneficially impacts, in particular, the low temperature adhesion properties and impact resistance of the compositions described herein.

With regard to the effects brought about the presence of the at least one first impact modifier in the compositions as described herein, it is preferred that part (B) comprises the at least one impact modifier in an amount of from 1 to 50 wt.-%, preferably from 5 to 45 wt.-%, more preferably from 10 to 40 wt.-%, based on the total weight of part (B). The same applies to the at least one second impact modifier in part (B) of the compositions as described herein.

The second part (B) of the curable adhesive composition precursor according to the present disclosure comprises at least one first epoxy resin, and optionally at least one second epoxy resin. Suitable epoxy resins for use herein will be easily identified by those skilled in the art, in the light of the present description.

The epoxy resin for use herein is not particularly limited. Epoxy resins are polymers having one or more epoxy-functionality. Typically, but not exclusively, the polymers contain repeating units derived from monomers having an epoxy-functionality but epoxy resins can also include, for example, silicone-based polymers that contain epoxy groups or organic polymer particles coated with or modified with epoxy groups or particles coated with, dispersed in, or modified with epoxy-groups-containing polymers. The epoxy-functionalities allow the resin to undertake cross-linking reactions. The epoxy resins may have an average epoxy-functionality of at least 1, greater than one, or of at least 2.

Any epoxy resins well known to those skilled in the art may be used in the context of the present disclosure. Epoxy resins may be aromatic, aliphatic, cycloaliphatic or mixtures thereof. In a typical aspect, the epoxy resins for use herein are aromatic. Preferably, the epoxy resins contain moieties of the glycidyl or polyglycidyl ether type. Such moieties may be obtained, for example, by the reaction of a hydroxyl functionality (for example but not limited to dihydric or polyhydric phenols or aliphatic alcohols including polyols) with an epichlorohydrin-functionality. As referred to herein, dihydric phenols are phenols containing at least two hydroxy groups bonded to the aromatic ring (also referred to as "aromatic" hydroxy groups) of a phenol -or in case of polyphenols at least two hydroxy groups are bonded to an aromatic ring. This means the hydroxyl groups can be bonded to the same ring of the polyphenol or to different rings each of the polyphenol. Therefore, the term "dihydric phenols" is not limited to phenols or polyphenols containing two "aromatic" hydroxy groups but also encompasses polyhydric phenols, i.e. compounds having more than two "aromatic" hydroxy groups.

Examples of useful dihydric phenols include resorcinol, catechol, hydroquinone, and polyphenols including p,p'-dihydroxydibenzyl, p,p'-dihydroxyphenylsulfone, p,p'-dihydroxybenzophenone, 2,2'-dihydroxyphenyl sulfone, p,p'-dihydroxybenzophenone, 2,2-dihydroxy-1,1-dinaphthylmethane, and the 2,2', 2,3', 2,4', 3,3', 3,4', and 4,4' isomers of dihydroxydiphenylmethane,dihydroxydiphenyldimethylmethane, dihydroxydiphenylethylmethylm ethane, dihydroxydiphenylmethylpropylmethane, dihydroxydiphenylethylphenyl-methane,dihydroxydiphenylpropylenphenylmethane, dihydroxydiphenylbutylphenyl-methane, dihydroxydiphenyltolylethane, dihydroxydiphenyltolylmethylmethane, dihydroxydiphenyldicyclohexylmethane, and dihydroxydiphenylcyclohexane.

Preferred epoxy resins include epoxy resins containing or consisting of glycidyl ethers or polyglycidyl ethers of dihydric or polyhydric phenols, such as for example, but not limited to bisphenol A, bisphenol F and combinations thereof. They contain one or more repeating units derived from bisphenol A and/or F. Such ethers, or such repeating units are obtainable, for example, by a polymerization of glycidyl ethers of bisphenol A and/or F with epichlorohydrin. Epoxy resins of the type of diglycidyl ether of bisphenol A can be represented by the formula wherein n denotes the repeating unit (in case of n= 0 the formula below represents the diglycidyl ether of bisphenol A):

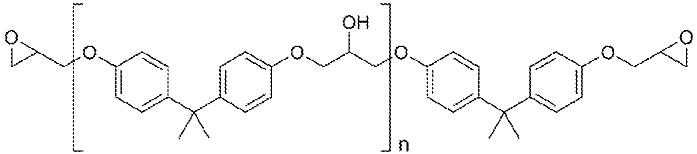

Typically, the epoxy resins are blends of several resins. Accordingly, n in the formula above may represent an average value of the blend, and may not be an integer but may include values like, for example and not limited thereto, 0.1 to 2.5.

Typically, the epoxy resin is liquid. The epoxy resins may include solid epoxy resins, used in dissolved form, or dispersed, for example in another liquid resin. Preferably, the epoxy resin is liquid at ambient conditions (23 °C, 1 bar). The epoxy resins may contain halogens, preferably bromine atoms to make them less flammable.

Examples of suitable and commercially available epoxy resins include diglycidylether of bisphenol A (available under the trade designation EPON 828, EPON 830, EPON 1001 or EPIKOTE 828 from Hexion Speciality Chemicals GmbH, Rosbach, Germany, or under the trade designation D.E.R-331 or D.E.R-332 from Dow Chemical Co,); diglycidyl ether of bisphenol F (e.g. EPICLON 830 available from Dainippon Ink and Chemicals, Inc. or D.E.R.-354 from Dow Chemical Co, Schwalbach/Ts., Germany); diglycidyl ethers of a blend of bisphenol A and bisphenol F (e.g. EPIKOTE 232 available from Momentive Speciality Chemicals, Columbus, USA). Other epoxy resins based on bisphenols are commercially available under the trade designations EPILOX (Leuna Epilox GmbH, Leuna, Germany); flame retardant epoxy resins are available under the trade designation D.E.R 580 (a brominated bisphenol type epoxy resin available from Dow Chemical Co.). Cycloaliphatic epoxy resins are commercially available under the trade designation EPINOX (Hexion Specialty Chemicals GmbH).

Preferably, part (B) of the compositions as described herein comprise the at least one first epoxy resin in an amount in the range of from 15 to 60 wt.-%, preferably from 20 to 55 wt.-%, more preferably from 25 to 50 wt.-%, based on the total weight of part (B).

Part (B) of the curable adhesive composition precursor according to the present disclosure may further comprise at least one second epoxy resin which is distinct from the first epoxy resin, i.e. chemically different. The chemical difference to the first epoxy resins may give rise to further differences to the first epoxy resins.

For example, the at least one second epoxy resin may be a multifunctional epoxy resin such as a trifunctional epoxy resin. This may be a single epoxy resin or may also be a combination of two or more epoxy resins. In a preferred embodiment, the equivalent weight of the trifunctional or higher epoxy is approximately 60 or higher, or approximately 70 or higher, or approximately 80 or higher from the perspective of ease of procurement and reaction properties, and is approximately 1000 or lower, or approximately 500 or lower, or approximately 300 or lower from the perspective of the heat resistance of the cured epoxy adhesive.

Preferred examples of trifunctional epoxy resins used herein include glycidyl amine type epoxy resins, glycidyl phenol type epoxy resins, and the like. Examples of glycidyl amine type epoxy resins include triglycidyl aminophenol epoxy compounds, triglycidyl aminocresol epoxy compounds. Examples of glycidyl phenol type epoxy resins include phenol novolac epoxy compounds, triphenyl methane triglycidyl ether compounds, and the like. Epoxy resins which may be employed as trifunctional (or higher) second epoxy resins as described herein are commercially available under the trade designations TACTIX and ARALDITE from Huntsman. It is also preferred that at least one of the at least one second epoxy resin is selected from the group commonly known to the skilled person as novolac epoxy resins. For example, well-known Novolac compounds are ortho-ortho, ortho-para and para-para methylene bridged phenolic compounds. Examples are the reaction products of phenol and formaldehyde. Novolac epoxy resins may be obtained, e.g. from the reaction of epichlorhydrin and said phenol-formaldehyde novolac compounds. Novolac epoxy compounds generally have multi-epoxy functionalities of greater than 1, greater than 2, or even greater than 3 as defined above. Epoxy novolac resins as described herein may be liquid or semi-solid. Examples of suitable and commercially available novolac epoxy resins are the novolac epoxy resins available from Dow Chemicals, e.g. under the trade designation D.E.N.

It is also preferred that the at least one second epoxy resin is an epoxy resin comprising additional functional moieties. Functional moieties are moieties which may react with other functional moieties such as epoxy moieties. The presence of additional functional moieties in the at least one second epoxy resin may therefore enhance the reactivity and/or the ability to crosslink with other epoxy resins such as the at least one first epoxy resin. This may be enhance the hardness, resistance to water and/or organic solvents, resistance to corrosion, resistance to mechanical influences and the like of the adhesives obtained from the compositions as described herein. Reactive moieties as described herein may be moieties selected from alcohol, amines (in particular secondary amines), thiols, sulphides, and the like. Exemplary and preferred epoxy resins modified with reactive moieties are commercially available under the trade designation Epalloy (such as Epalloy 7200) from CVC Chemicals. Instead of, or in addition to, using the aromatic epoxy resins described above also their fully or partially hydrogenated derivatives (i.e. the corresponding cycloaliphatic compounds) may be used. Instead of, or in addition to using aromatic epoxy resins also aliphatic, for example acyclic, linear or branched, epoxy resins may be used. Adding partially or fully hydrogenated epoxy resins to part (B) of the curable adhesive precursors as described herein has the effect of reducing the viscosity of part (B) and the curable adhesive composition, respectively. This is particularly advantageous when preparing part (B), mixing part (B) with part (A) and applying the curable composition on a substrate. Accordingly, the partially or fully hydrogenated epoxy resin may be called "viscosity modifier" in the context of the present disclosure. Preferably, hydrogenated bisphenol A and/or bisphenol F diglycidyl ethers are employed. For example, a hydrogenated bisphenol A diglycidyl ether resin is commercially available from Hexion under the trade designation "Eponex" such as "Eponex 1510". When present, the viscosity modifier is contained in part (B) of the curable adhesive composition precursor according to the present disclosure in an amount of from 1 to 25 wt.-%, preferably from 3 to 20 wt.-%, more preferably from 5 to 15 wt.-%.

Using the combination of first and second epoxy resins as described herein may give rise to particularly desirable combination of properties of the cured composition such as high mechanical strengths and favourable properties such as high overlap shear strength and high peel strength, even at elevated temperatures. In addition, the combination of said first and second epoxy resins as described herein may also accelerate the cure rate without sacrificing mechanical strengths of the obtained adhesives.

With regard to the respective amounts, it is preferred that the at least one second epoxy resin as described herein is comprised in part (B) in an amount of from 5 to 60 wt.-%, preferably from 7 to 55 wt.-%, more preferably from 10 to 50 wt.-%, based on the total weight of part (B).

It is further preferred that part (B) of the curable adhesive precursor according to the present disclosure comprises an epoxy-based reactive diluent. Reactive diluents are epoxy-containing molecules. The epoxy-based reactive diluent for use herein is not particularly limited. Any epoxy-based reactive diluent commonly known in the art may be used in the context of the present disclosure.

Without wishing to be bound by theory, it is believed that the epoxy-based reactive diluent beneficially impacts, in particular, the flow characteristics of the curable compositions as described herein.

In a particular aspect of the present disclosure, wherein the epoxy-based reactive diluent for use herein has a saturated or unsaturated cyclic backbone, and preferably comprises glycidyl ether as reactive terminal end portions.

According to a preferred aspect, the epoxy-based reactive diluent for use herein is selected from the group consisting of diglycidyl ether of resorcinol, diglycidyl ether of cyclohexane dimethanol, diglycidyl ether of neopentyl glycol, triglycidyl ether of trimethylolpropane, and any mixtures thereof.

Commercially available reactive diluents for use herein include for example "Reactive Diluent 107" (available from Hexion) and the "Epodil" series (available from Air Products and Chemical Inc, Allentown, PA, USA) including in particular EPODIL 746, EPODIL 747, EPODIL 748 and EPODIL 757.

Part (B) of the compositions according to the present disclosure may further comprise at least one epoxy reactive flexibilizer. An epoxy reactive flexibilizer is a compound having at least one epoxy moiety and also at least one long alkyl or alkenyl component. The presence of the at least one epoxy reactive flexibilizer has the effect of improved flexibility of the curable composition and the cured adhesive bonds obtained therefrom even at low temperatures and an increased hydrophobicity of the cured adhesive bond. While the first property may be desirable from a handling point of view, both properties are advantageous with regard to corrosion protection of a substrate surface onto which the compositions as described herein are applied. Furthermore, an improved flexibility of the cured adhesive composition may be very advantageous with regard to the failure mode. In particular, cohesive failure mode may be achieved. An "cohesive failure mode" is used for the situation when an adhesive bond between two substrates fails, i.e. breaks in that the failure is completely within the adhesive bond. This is opposed to the "adhesive failure mode" where the adhesive is at least partially peeled off from the surface of one substrate. A cohesive failure mode behaviour is considered superior and more desirable than an adhesive failure mode. In the present case, a cohesive failure mode may be achieved even when the metal substrates are at least partially covered with oil and/or grease commonly used in automotive industries.

The epoxy reactive flexibilizer is preferably a component comprising an aromatic core such as phenyl having at least one long aliphatic side chain and at least one side chain comprising at least one epoxy moiety. Such compounds are obtainable from epoxidizing phenolic lipids. Generally, the term "phenolic lipids" is used for a class of natural products composed of long aliphatic chains and phenolic rings. As used herein, this term describes compounds of either natural or preferably synthetic origin composed of long aliphatic chains and phenolic rings. Preferably, the at least one phenolic lipid is selected from alkylcatechols, alkylphenols, alkylresorcinols and anacardic acids. More preferably, the at least one phenolic lipid is an alkylphenol selected from propylphenol, butylphenol, amylphenol, octylphenol, nonylphenol, dodecylphenol and cardanol-based compounds. Epoxy-reactive Cardanol-based compounds are commercially available, e.g. under the trade designation NX-2026 or Ultra Lite 2023 from Cardolite Corporation.

It is preferred that part (B) of the compositions as described herein comprise the at least one epoxy-reactive flexibilizer in an amount of from 0.1 to 10 wt.-%, preferably from 0.5 to 8 wt.-%, more preferably from 1.5 to 6 wt.-%, based on the total amount of part (B).

Part (B) of the curable adhesive composition precursor according to the present disclosure preferably comprises at least one viscosity modifier. In general, incorporation of at least one viscosity modifier allows to adjust the viscosity of part (B) and finally of the curable adhesive composition obtained after combining part (B) with part (A) as described herein. It was found that using compounds having at least one epoxy moiety as viscosity modifiers increases the compatibility with the other components in part (B) and also allows for crosslinking and therefore improvement of the adhesive properties of the curable adhesive composition. Accordingly, it is preferred that the at least one viscosity modifier comprises at least one epoxy moiety. In this regard, it was found that best results were obtained when using at least one at least partially hydrogenated bisphenol glycidyl ether, which is preferred in the present disclosure. Preferably, the at least one viscosity modifier comprises at least one fully hydrogenated bisphenol glycidyl ether. It is preferred that the bisphenol is bisphenol A and/or bisphenol F. The at least one viscosity modifier is contained in part (B) in an amount in the range of from 1 to 25 wt.-%, preferably from 3 to 20 wt.-%, more preferably from 5 to 15 wt.-%, based on the total weight of part (B).

Part (B) of the curable adhesive composition precursor as described herein comprises at least one amphoteric corrosion inhibitor. This has the advantage of improved corrosion inhibition, i.e. the ability to prevent corrosion on the metallic surface onto which the adhesive composition as described herein had been applied. Furthermore, an amphoteric corrosion inhibitor is particularly advantageous on metallic surfaces where the corrosion is known to be driven by acidic factors and/or the metal itself exhibits amphoteric properties. This has particular relevance, for example, aluminium or aluminium-alloys presently used in the automotive industry. Best results have been observed with phosphonate compounds and phosphosilicate compounds. Accordingly, the at least one amphoteric corrosion inhibitor is preferably selected from phosphonate compounds and phosphosilicate compounds. In this regard, it is preferred that the at least one phosphonate compound and/or the at least one phosphosilicate compound is selected from potassium salts, sodium salts, magnesium salts, strontium salts, calcium salts, preferably from magnesium salts, strontium salts, calcium salts, and more preferably from magnesium salts and strontium salts. The at least one amphoteric corrosion inhibitor is preferably contained in part (B) in an amount in the range of from 0.01 to 20 wt.-%, preferably from 0.05 to 15 wt.-%, more preferably from 0.1 to 12 wt.-%, based on the total weight of part (B).

It is preferred that part (A) and part (B) are present in the compositions as described herein, in particular in the curable adhesive composition precursor, is in the range of from 10:1 to 1:2, preferably from 8:1 to 1:1, more preferably from 6:1 to 1:2. This may be achieved by containing part (A) and part (B) in an applicator well-known in the art comprising two separate cartouches (i.e. part (A) in one cartouche and part (B) in the other cartouche) and a mixing nozzle. As such, volumetric ratios are comprised herein. Also, storage of part (A) and part (B) in two separate tanks and pumping the parts into a mixing nozzle according to the present circumstances is also comprised herein. It is also understood that the advantageous effects of the compositions according to the present disclosure are only achieved within these mixing ratios. For example, using a lower amount of part (A) may compromise both curing speed of the curable adhesive composition as well as the resistance of the adhesive obtained therefrom. It is also understood that using different ratios within the range as described herein will influence the properties of the curable adhesive composition and the cured composition. For example, the viscosity of the curable adhesive composition may be adjusted. Also, the flexibility of the cured adhesive may be adjusted according the requirements of the corresponding application.

The present disclosure further provides a curable adhesive composition, obtained from combining parts (A) and (B) of the curable adhesive composition precursor as described herein. Combining as used herein has the meaning commonly used in the art for two-component compositions, i.e. combining both parts and mixing afterwards or mixing and combining in one step. This is often the case in mixing nozzles well-known in the art and commercially used and available for this purpose. The curable adhesive composition is preferably prepared directly before its intended use, i.e. the application onto a surface of a substrate. Due to the properties of the compositions as described herein, the surface is preferably a metal surface such as a steel sheet or a steel part of a body of a vehicle such as a car. After application and subsequent curing of the adhesive composition according to the present disclosure, a strong adhesive bond is obtained between the two substrates.

The curable adhesive exhibits properties highly desirable in applications such as in so-called body-in-white processes in the automotive industry. It is preferred that the curable adhesive composition according to the present disclosure the curable adhesive composition exhibits after curing for 2 hours at room temperature an overleap shear strength according to DIN EN 1465 of at least 0.5 MPa, preferably of at least 1 MPa, and more preferably of at least 1.5 MPa. This has the advantage that good initial bonding strength is obtained, even before final cure at higher temperature, which means that bonded parts or a part/panel adhesive assembly may be moved further down the process line, with reduced danger of distortion between the parts or panels. Furthermore, it is preferred that the curable adhesive precursor exhibits after final curing after a dwell time of 30 days a peel strength according to ASTM 1876 of at least 100 N/25 mm, preferably of at least 120 N/25 mm, more preferably of at least 140 N/25 mm. This means that the cured adhesive obtained from curing the adhesive compositions according to the present disclosure exhibit a reduced dwell time sensitivity. Dwell time is usually defined as the time after application of the adhesive onto the substrate until the final cure process commonly carried out in an e-coat oven. This period may vary between 24 hours to several weeks. In general, the shorter the dwell time, the better the adhesive performance. Accordingly, the adhesive as described herein may last longer in metal part or panel assemblies in manufacturing processes, reducing panel distortion or wash-out of the adhesive. Moreover, it is preferred that the adhesive composition exhibits after curing a tensile elongation according to ASTM D639 of at least 10 %, preferably of at least 15 %, more preferably of at least 20 %. This means that the cured adhesive as described herein may exhibit a certain flexibility, which is particularly advantageous for numerous applications in the automotive industry.

Furthermore, the present disclosure provides a method for bonding parts,
a method for bonding parts, comprising the following steps:
(a) Providing an adhesive as described herein;
(b) Applying the adhesive composition onto at least part of a surface of a first part;
(c) Applying a second part onto the adhesive composition applied to the first part;
(d) Performing a curing step to cure the adhesive composition as described herein such as to adhesively bond the first part and the second part.

Preferably, the first part and/or the second part comprise at least one metal. The metal of the first and second part may be the same or different. Preferably, the metal of the first part is the same metal as of the second part. It is also preferred that the metal of the first part is different from the metal of the second part. Preferably, the metal is selected from steel, aluminium, magnesium, titanium, zinc, and any combinations and alloys therefrom. In a preferred embodiment, the first part comprises steel and the second part comprises aluminium. Due to the excellent properties of the adhesive composition as described herein, panel distortion risk is greatly reduced. In another preferred embodiment, the first and second part comprise aluminium. In yet another preferred embodiment, the first and second part comprise steel. It is preferred that the method comprises an additional curing step before the curing step (d) at a lower temperature than in curing step (d). Preferably, this first curing step is an induction curing step. Induction curing means that parts of the first and/or second part are being punctually heated by means of induction. This has the advantage that the method is contactless and no oven or the like is required. Moreover, the application of induction heating or induction curing offers the possibility of punctually pre-curing the adhesive to a certain level at certain points, thereby securing the parts in place, and reducing the danger of panel or part distortion in subsequent process steps in the manufacturing line. In this regard, it is preferred that the first temperature in the first curing step is less than 130 °C, preferably less than 130 °C, more preferably less than 110 °C. This is advantageous since there exists the general desire to perform the first curing step, e.g. induction curing to secure the panels or parts in place, at a temperature as low as possible. With the reduced temperature as described herein, energy use may be reduced, and the risk of discoloration or distortion of panels may also be reduced. Preferably, the temperature in the second curing step (d) is in the range of from 140 °C to 230 °C, preferably from 150 °C to 200 °C, and more preferably from 160 °C to 190 °C. With curing temperatures in these ranges, secure curing and high bonding strengths may be achieved. For example, the second curing step may be carried out simultaneously when the metal parts (covered with an e-coat as commonly applied in automotive car body manufacture) are placed in an e-coat curing oven. This co-curing of the adhesive in a curing or baking step generally taken place in the manufacturing process line is highly convenient since there is no necessity for an extra curing step. Also, it is preferred that at least one of the first and second part is at least partially covered with oil and/or grease. This is usually the case in automotive car body production cycles since parts have been or will be formed, moulded or stamped before or after application of the adhesive. Preferably, the method at least forms part of a body-in-white process.

Due to the excellent suitability of the curable adhesive composition precursors according to the present disclosure and the curable adhesive compositions obtained therefrom for bonding parts, the present disclosure further provides a use of the curable adhesive compositions and its corresponding precursors for bonding parts, preferably of bonding metal parts in manufacturing operations in the automotive industry. The metals and parts comprised in the use as described herein are the same as disclosed herein in conjunction with the method according to the present disclosure. Preferably, the use as described herein is a body-in-white process in the automotive industry.

### Examples

The present disclosure is further described without however wanting to limit the disclosure thereto. The following examples are provided to illustrate certain embodiments but are not meant to be limited in any way. Prior to that some test methods used to characterize materials and their properties will be described. All parts and percentages are by weight unless otherwise indicated.

### EXAMPLES

### Materials used:

| **Composition** | **Function** | **Trade name** | **Supplier** |
|---|---|---|---|
| Core shell rubber based on butadiene | Impact modifier | Paraloid EXL 2650J | DowDuPont |
| Bisphenol A epoxy resin | Base | D.E.R. 331 | DowDuPont |
| Butadiene-acrylic copolymer dispersed in bisphenol A epoxy resin | Impact modifier | MX 153 | Kaneca |
| Cardanol glycidyl ether | Oil compatibility, flexibility | Ultralite 513 | Cardolite |
| Cashew, nutshell liquid, polymer with epichlorohydrin and phenol | Oil compatibility, flexibility | NC 514S | Cardolite |
| Hydrogenated bisphenol A epoxy resin | Oil compatibility, viscosity modifier | Eponex 1510 | Resolution Performance Products |
| Amorphous Silica | Filler | Fused Silica SF20 | 3M |
| Strontium phosphosilicate | Corrosion inhibitor, oil absorption | Halox SW111 | ICL Performance Products |
| Bis(3-triethoxysilypropyl) amine | Surface modifier | Dynasylan 1122 | Evonik |
| [3-(2,3-epoxypropoxy) propyl] triethoxysilane | Surface modifier | Dynasylan Glyeo | Evonik |
| Glass beads | Gap stability | Glass beads 90-150 µm | 3M |
| Aluminum silicate | Filler | Eurocell 140A | Europerl |
| Calcium oxide | Filler | Weißfeinkalk S40 | Märker |
| Hydrophobic fumed silica | Thixotropic agent | Aerosil R202 | Evonik |
| Benzamide | Color agent | Cromophtal Yellow 3G | BASF |

### Test Methods

### Cure rate

Cure rate was determined by measuring overlap shear strengths as set forth below (apart from the curing procedure described). The samples were coated with the mixed adhesive compositions and allowed to cure at room temperature. Overlap shear strengths was then tested after certain intervals. Comparing the shear strength over time provides an indication of the cure rate, i.e. a comparison of cure rate of different examples and comparative examples over time.

### Overlap Shear Strength according to DIN EN 1465 (issued 2009)

Overlap shear strength is determined according to DIN EN 1465 using a Zwick Z050 tensile tester (commercially available by Zwick GmbH & Co. KG, Ulm, Germany) operating at a cross head speed of 10 mm/min on dry lubed coated aluminium substrates having the following dimension 100 mm X 25 mm X 0.8 mm and coated with 3 g/m² Oil (PL 3802-39S commercially available from Fuchs Petrolub AG, Germany). For the preparation of an Overlap Shear Strength test assembly the epoxy film to be tested (having a thickness of 0.4 mm) is applied on one end of a first steel strip and covered by a second steel strip forming an overlap joint of 10 mm. The overlap joints are then clamped together using two binder clips and the test assemblies placed into an air circulating oven with a minimum baking cycle of 20 min at 160 °C and a maximum bake cycle of 45 min at 200 °C. Hereby the test assemblies are heated up and cooled down using 3 °C/minute ramps. Test assemblies are then conditioned for 24 hours at ambient condition 23 +/-2 °C and 50 +/- % % relative humidity before testing. The tests assemblies are placed prior to testing on the Zwick tensile tester into an environmental chamber (commercially available by RS Simulatoren, Oberhausen, Germany) and the Overlap shear strength measured at room temperature (23°C +/- 2°C). 3 samples are measured for each of the examples at the three different test temperatures and results averaged and reported in MPa.

### Adhesive peel strength according to ASTM 1876 (issued 2008)

The Adhesive Peel strength is measured on dry lubed coated aluminium substrates having the following dimension 15 0mm X 25 mm X 0.8 mm and coated with 3 g/square meter Oil (PL 3802-39s commercially available from Fuchs Petrolub AG, Germany) according to ASTM 1876 using a Zwick Z050 tensile tester (commercially available by Zwick GmbH & Co. KG, Ulm, Germany).

The cross head speed is set for all measurements to 100 mm/min and adhesive peel strength measured at 23 °C +/- 2 °C and a relative humidity of 50 +/- 5 %. For test assembly preparation a masking tape (Scotch^{™} 2610 Masking Tape, commercially available from 3M, USA) is applied to a first steel strip. Hereby the masking tape is applied to visualize the bond area. The bond area has a dimension of 100mm X 25mm. The example material to be tested is then applied to the marked bond area and covered by a second steel strip having the same dimension as the first one. The two strips are hereafter first manually pressed together and then clamped together using 2 binder clips along the bond line, in order to hold the test assembly in place. The test assemblies are cured for with a minimum baking cycle of 20 min at 160 °C and a maximum bake cycle of 45 min at 200 °C in an air circulating oven. Hereby the test assemblies are heated up and cooled down using 3°C/minute ramps. Test assemblies are then conditioned for 24 hours at ambient condition 23 +/-2°C and 50 +/-5 % relative humidity before testing. Per example material, 3 adhesive peel strength test assemblies are prepared and the test results averaged. Test results are reported in N/25mm.

### Failure Mode

Samples were prepared as described above for the overlap shear strength. Then, the overlap shear strength as described above until the straps were separated, i.e. the samples were destroyed. The samples were visually inspected by the naked eye and evaluated as follows: if the failure was completely within the adhesive layer, the failure mode was considered as "cohesive failure". However, if a failure was observed in that at least part of the adhesive layer had separated from the metal substrate, the failure mode was considered "adhesive failure". From an application point of view, the "cohesive failure mode" is highly desirable and therefore strongly preferred.

### Impact peel analysis

Analysis was carried out according to DIN EN ISO 11343. Substrate was stainless steel, substrate thickness was 0.8 mm. Sample width was 20 mm. Application was carried out at 35 °C and 24 h in joined state. Curing was carried out at 180 °C for 30 min. Testing equipment used was Instron VHS 50/2, testing speed was 2 m/s.

### Elongation according to ASTM D638

The flexibility of each composition was determined by measuring tensile elongation of cured adhesive according to ASTM D638.

### Preparation of part (A) and part (B)

The ingredients as set forth in tables 1 and 2 were used to prepare part (A) and part (B) according to the procedures set forth below.

**Table 1: Composition of part (A). All ratios given in wt.-%.**

| **Raw material Part (A)** | **Ex. 1** | **Ex. 2** | **Ex. 3** | **Ex. 4** |
|---|---|---|---|---|
| RZ 810 | 42.3 | 44.6 | 44.6 | 44.6 |
| Lite C3060 | 12.2 | 12.9 | 12.9 | 12.9 |
| NX-2026 | 0.0 | 5.0 | 4.9 | 0.0 |
| Calciumnitrat-Tetrahydrat | 12.8 | 10.1 | 0.0 | 0.0 |
| Sodium thiosulfate pentahydrate | 0.0 | 0.0 | 10.1 | 10.1 |
| Ancamine K54 | 16.5 | 17.3 | 17.3 | 17.3 |
| Fused Silica SF20 | 14.3 | 10.2 | 7.2 | 12.1 |
| Glass beads (90 to 150 micrometers) | 0.0 | 0.0 | 3.0 | 3.0 |
| Key plast blue A | 0.1 | 0.1 | 0.1 | 0.1 |

**Table 2: Composition of part (B). All ratios given in wt.-%.**

| **Raw material part (B)** | **Ex. 1** | **Ex. 2** | **Ex. 3** | **Ex. 4** |
|---|---|---|---|---|
| Paraloid EXL 2650J | 12.2 | 12.2 | 12.2 | 12.2 |
| D.E.R. 331 | 20.8 | 20.8 | 20.6 | 20.6 |
| MX 153 | 27.0 | 27.0 | 27.0 | 27.0 |
| NC 514S | 5.0 | 2.5 | 2.5 | 2.5 |
| Ultralite 513 | 0.0 | 2 | 2.5 | 2.5 |
| Eponex 1510 | 12.0 | 12.0 | 12.0 | 12.0 |
| Fused Silica SF20 | 12.0 | 12.0 | 11.9 | 11.9 |
| Halox SW111 | 5.0 | 5.0 | 5.0 | 5.0 |
| Dynasylan 1122 | 0.0 | 0.0 | 0.0 | 0.0 |
| Dynasylan Glyeo | 1.4 | 1.5 | 1.5 | 1.5 |
| Glass beads (90 to 150 micrometers) | 1.0 | 1.0 | 0.0 | 0.0 |
| Eurocell A140 | 0.5 | 0.5 | 0.0 | 0.0 |
| Weißfeinkalk S40 | 1.1 | 1.1 | 1.1 | 1.1 |
| Aerosil R202 | 2.0 | 2.0 | 3.5 | 3.5 |
| Color agent | 0.1 | 0.1 | 0.3 | 0.3 |

### Part A:

Part (A) was prepared by adding the calcium nitrate or the sodium thiosulfate to the main curing agent and mixed for 2 minutes in a speed mixer (3000 U/min). After complete dispersion of the calcium nitrates the fillers were then added and mixing continued for further 2 minutes. This was followed by addition and mixing of ancamine K54. In a last step, part (A) was degassed for 2 minutes under vacuum while mixing. The degassed part A was then filled into one side of a 200 mL dual Pac cartridge.

### Part B:

The base resin was manufactured by mixing the core shell modified epoxy resin Kaneka MX 257 with both Epikote 828, Eponex 1510 and Cardolite 513 Ultralite in speed mixer for 1 minute. The fillers were added then step-wise and mixed several times until a homogeneous mixture was obtained. The mixture is then degassed for 2 minutes under vacuum while mixing. The degassed part B was filled into the other side of the dual Pac cartridge. The mixing ratio part (A) to part (B) by volume were 1:3.

### Evaluation:

The cure rates of Ex. 1 were tested. As comparative example Comp. Ex. 1, a commercially available 2K epoxy structural adhesive composition was used. The results are summarized in table 3.

**Table 3: Cure rate.**

| OLS [MPa] after curing at RT | Ex. 1 | Comp. Ex. 1 |
|---|---|---|
| 1.5 h | 0.5 | 0 |
| 2 h | 2.25 | 0.1 |
| 3 h | 5.5 | 1 |

### Impact Peel Test

The results are summarized in table 4.

**Table 4: Impact Peel.**

| Example | Ex. 1 | Ex. 2 |
|---|---|---|
| Impact peel [MPa] | 15.4 | 16.4 |

### Viscosity observations

Furthermore, the viscosity of Comp. Ex. 1 and Ex. 3 was compared after combining and mixing the respective parts (A) and (B) as described above at room temperature. While Comp. Ex. 1 exhibited a somewhat creamy appearance, Ex. 3 was much less viscous. In fact, the analysis of viscosity at 25 °C showed an about tenfold lower viscosity of Ex. 3 than Comp. Ex. 1.

### Overlap shear evaluation

Also, OLS samples of Ex. 2, Ex. 3 and Ex. 4 were prepared at room temperature and then stored at 40 °C for 3 h. The results are summarized in table 5.

**Table 5: OLS evaluation.**

| Example | Ex. 2 | Ex.3 | Ex.4 |
|---|---|---|---|
| OLS [MPa] after curing at 40 °C for 3 h | 12.2 | 16.8 | 20.6 |

## Claims

1. A curable adhesive composition precursor, comprising
a first part (A) comprising
(i) at least one first epoxy curating agent selected from diamines;
(ii) at least one second epoxy curing agent selected from phenalkamides and/or phenalkamines;
(iii) at least one first curing aid selected from metal salt hydrates;
(iv) at least one second curing aid selected from phenolic amines;
a second part (B) comprising
(i) at least one epoxy resin;
(ii) at least one first impact modifier;
(iii) at least one second impact modifier different from the at least one first impact modifier;
(iv) at least one amphoteric corrosion inhibitor selected from phosphonate compounds and phosphosilicate compounds.

2. The curable adhesive composition precursor according to claim 1, wherein the at least one diamine is selected from polyamidoamines and polymeric diamines, preferably from polymeric diamines, more preferably from polymeric amido diamines.

3. The curable adhesive composition precursor according to claim 1 or claim 2, wherein the at least one metal salt hydrate is selected from metal nitrates, metal triflates, metal thiosulfates, metal hydrogenphosphates, metal phosphates, metal sulfates, and any combinations and mixtures thereof, preferably from metal nitrates, metal triflates, metal thiosulfates, and any combinations and mixtures thereof, and more preferably from metal nitrates and metal thiosulfates, and any combinations and mixtures thereof.

4. The curable adhesive composition precursor according to any one of the preceding claims, further comprising at least one reactive diluent selected from monofunctional epoxy reactive compounds, preferably from cardanol-based glycidyl ethers.

5. The curable adhesive composition precursor according to any one of the preceding claims, wherein the at least one metal salt hydrate is selected from calcium nitrate, magnesium nitrate, calcium triflate, sodium thiosulfate, potassium thiosulfate and any combinations thereof. .

6. The curable adhesive composition precursor according to any one of the preceding claims, wherein the at least one metal salt hydrate is selected from calcium nitrate and sodium thiosulfate..

7. The curable adhesive composition precursor according to any one of the preceding claims, wherein the at least one phosphonate compound and phosphosilicate compound is selected from potassium salts, sodium salts, magnesium salts, strontium salts, calcium salts, preferably from magnesium salts, strontium salts, calcium salts, and more preferably from magnesium salts and strontium salts.

8. The curable adhesive composition precursor according to any one of the preceding claims, wherein the at least one first impact modifier is selected from core-shell impact modifiers, preferably from core-shell rubbers.

9. The curable adhesive composition precursor according to any one of the preceding claims, wherein the at least one second impact modifier is selected from core-shell impact modifiers and butadiene rubber impact modifiers, and any combinations and mixtures thereof.

10. The curable adhesive composition according to any one of the preceding claims, wherein the at least one first impact modifier is selected from core shell impact modifiers, and the at least one second impact modifier is selected from butadiene or nitrile rubbers.

11. A curable adhesive composition, obtained from combining part (A) and part (B) of the curable adhesive precursor according to any one of the preceding claims.

12. A method for bonding parts, comprising the following steps:
(a) Providing an adhesive composition according to claim 11;
(b) Applying the adhesive composition onto at least part of a surface of a first part;
(c) Applying a second part onto the adhesive composition applied to the first part;
(d) Perform a curing step to cure the adhesive composition such as to adhesively bond the first part and the second part.

13. The method according to claim 12, wherein the metal is selected from steel, aluminium, magnesium, titanium, zinc, and any combinations and alloys therefrom, preferably from aluminium and steel, and more preferably from aluminium and its alloys.

14. The method according to claim 12 or claim 13, wherein the method comprises an additional curing step before the curing step (d) at a lower temperature than in curing step (d), preferably wherein curing in the additional curing step is carried out by means of induction curing.

15. Use of the curable adhesive composition precursor according to any one of claims 1 to 10 or of the curable adhesive composition according to claim 11 for bonding parts, preferably bonding metal parts in a manufacturing operation in the automotive industry.

## Patentansprüche

1. Ein Vorläufer einer härtbaren Klebstoffzusammensetzung, umfassend
einen ersten Teil (A), umfassend
(i) mindestens ein erstes Epoxidhärtungsmittel, das aus Diaminen ausgewählt ist;
(ii) mindestens ein zweites Epoxidaushärtungsmittel, das aus Phenalkamiden und/oder Phenalkaminen ausgewählt ist;
(iii) mindestens einen ersten Aushärtungshilfsstoff, der aus Metallsalzhydraten ausgewählt ist;
(iv) mindestens einen zweiten Aushärtungshilfsstoff, der aus Phenolaminen ausgewählt ist;
einen zweiten Teil (B), umfassend
(i) mindestens ein Epoxidharz;
(ii) mindestens einen ersten Schlagzähmodifikator;
(iii) mindestens einen zweiten Schlagzähmodifikator, der sich von dem mindestens einen ersten Schlagzähmodifikator unterscheidet;
(iv) mindestens einen amphoteren Korrosionsinhibitor, der aus Phosphonatverbindungen und Phosphosilicatverbindungen ausgewählt ist.

2. Der Vorläufer der härtbaren Klebstoffzusammensetzung nach Anspruch 1, wobei das mindestens eine Diamin aus Polyamidoaminen und polymeren Diaminen, vorzugsweise aus polymeren Diaminen, mehr bevorzugt aus polymeren Amidodiaminen, ausgewählt ist.

3. Der Vorläufer der härtbaren Klebstoffzusammensetzung nach Anspruch 1 oder 2, wobei das mindestens eine Metallsalzhydrat aus Metallnitraten, Metalltriflaten, Metallthiosulfaten, Metallhydrogenphosphaten, Metallphosphaten, Metallsulfaten und beliebigen Kombinationen und Mischungen davon, vorzugsweise aus Metallnitraten, Metalltriflaten, Metallthiosulfaten und beliebigen Kombinationen und Mischungen davon und mehr bevorzugt aus Metallnitraten und Metallthiosulfaten und beliebigen Kombinationen und Mischungen davon, ausgewählt ist.

4. Der Vorläufer der härtbaren Klebstoffzusammensetzung nach einem der vorstehenden Ansprüche, ferner umfassend mindestens ein reaktives Verdünnungsmittel, das aus monofunktionellen epoxidreaktiven Verbindungen, vorzugsweise aus Glycidylethern auf Cardanolbasis, ausgewählt ist.

5. Der Vorläufer der härtbaren Klebstoffzusammensetzung nach einem der vorstehenden Ansprüche, wobei das mindestens eine Metallsalzhydrat aus Calciumnitrat, Magnesiumnitrat, Calciumtriflat, Natriumthiosulfat, Kaliumthiosulfat und beliebigen Kombinationen davon ausgewählt ist.

6. Der Vorläufer der härtbaren Klebstoffzusammensetzung nach einem der vorstehenden Ansprüche, wobei das mindestens eine Metallsalzhydrat aus Calciumnitrat und Natriumthiosulfat ausgewählt ist.

7. Der Vorläufer der härtbaren Klebstoffzusammensetzung nach einem der vorstehenden Ansprüche, wobei die mindestens eine Phosphonatverbindung und Phosphosilicatverbindung aus Kaliumsalzen, Natriumsalzen, Magnesiumsalzen, Strontiumsalzen, Calciumsalzen, vorzugsweise aus Magnesiumsalzen, Strontiumsalzen, Calciumsalzen und mehr bevorzugt aus Magnesiumsalzen und Strontiumsalzen, ausgewählt ist.

8. Der Vorläufer der härtbaren Klebstoffzusammensetzung nach einem der vorstehenden Ansprüche, wobei der mindestens eine erste Schlagzähmodifikator aus Kern-Schale-Schlagzähmodifikatoren, vorzugsweise aus Kern-Schale-Kautschuken, ausgewählt ist.

9. Der Vorläufer der härtbaren Klebstoffzusammensetzung nach einem der vorstehenden Ansprüche, wobei der mindestens eine zweite Schlagzähmodifikator aus Kern-Schale-Schlagzähmodifikatoren und Butadienkautschukschlagzähmodifikatoren und beliebigen Kombinationen und Mischungen davon ausgewählt ist.

10. Die härtbare Klebstoffzusammensetzung nach einem der vorstehenden Ansprüche, wobei der mindestens eine erste Schlagzähmodifikator aus Kern-Schale-Schlagzähmodifikatoren ausgewählt ist und der mindestens eine zweite Schlagzähmodifikator aus Butadien- oder Nitrilkautschuken ausgewählt ist.

11. Eine härtbare Klebstoffzusammensetzung, die aus einem Kombinieren von Teil (A) und Teil (B) des Vorläufers eines härtbaren Klebstoffs nach einem der vorstehenden Ansprüche erhalten wird.

12. Ein Verfahren zum Verbinden von Teilen, umfassend die folgenden Schritte:
(a) Bereitstellen einer Klebstoffzusammensetzung nach Anspruch 11;
(b) Aufbringen der Klebstoffzusammensetzung auf mindestens einen Teil einer Oberfläche eines ersten Teils;
(c) Aufbringen eines zweiten Teils auf die Klebstoffzusammensetzung, die auf den ersten Teil aufgebracht ist;
(d) Durchführen eines Aushärtungsschritts, um die Klebstoffzusammensetzung auszuhärten, um den ersten Teil und den zweite Teil klebend zu verbinden.

13. Das Verfahren nach Anspruch 12, wobei das Metall aus Stahl, Aluminium, Magnesium, Titan, Zink und beliebigen Kombinationen und Legierungen davon, vorzugsweise aus Aluminium und Stahl und mehr bevorzugt aus Aluminium und seinen Legierungen, ausgewählt ist.

14. Das Verfahren nach Anspruch 12 oder 13, wobei das Verfahren einen zusätzlichen Aushärtungsschritt vor dem Aushärtungsschritt (d) bei einer niedrigeren Temperatur als in dem Aushärtungsschritt (d) umfasst, wobei vorzugsweise eine Aushärtung in dem zusätzlichen Aushärtungsschritt mittels Induktionsaushärtung vorgenommen wird.

15. Verwendung des Vorläufers der härtbaren Klebstoffzusammensetzung nach einem der Ansprüche 1 bis 10 oder der härtbaren Klebstoffzusammensetzung nach Anspruch 11 zum Verbinden von Teilen, vorzugsweise Verbinden von Metallteilen in einem Fertigungsbetrieb in der Automobilindustrie.

## Revendications

1. Précurseur de composition adhésive durcissable, comprenant une première partie (A) comprenant
(i) au moins un premier agent de durcissement époxy choisi parmi les diamines ;
(ii) au moins un second agent de durcissement époxy choisi parmi des phénalkamides et/ou des phénalkamines ;
(iii) au moins un second adjuvant de durcissement choisi parmi des hydrates de sel métallique ;
(iii) au moins un second adjuvant de durcissement choisi parmi des amines phénoliques ;
une seconde partie (B) comprenant
(i) au moins une résine époxy ;
(ii) au moins un premier modificateur d'impact ;
(iii) au moins un second modificateur d'impact différent de l'au moins premier modificateur d'impact ;
(iv) au moins un inhibiteur de corrosion amphotère choisi parmi des composés phosphonates et des composés phosphosilicates.

2. Précurseur de composition adhésive durcissable selon la revendication 1, dans lequel l'au moins une diamine est choisie parmi des polyamidoamines et des diamines polymères, de préférence parmi des diamines polymères, plus préférablement parmi des amido diamines polymères.

3. Précurseur de composition adhésive durcissable selon la revendication 1 ou la revendication 2, dans lequel l'au moins un hydrate de sel métallique est choisi parmi des nitrates métalliques, triflates métalliques, thiosulfates métalliques, hydrogénophosphates métalliques, phosphates métalliques, sulfates métalliques et toutes les combinaisons et mélanges de ceux-ci, de préférence parmi des nitrates métalliques, triflates métalliques, thiosulfates métalliques et toutes combinaisons et mélanges de ceux-ci, et plus préférablement parmi des nitrates métalliques et des thiosulfates métalliques, et toutes combinaisons et mélanges de ceux-ci.

4. Précurseur de composition adhésive durcissable selon l'une quelconque des revendications précédentes, comprenant en outre au moins un diluant réactif choisi parmi des composés réactifs époxy monofonctionnels, de préférence parmi des éthers glycidyliques à base de cardanol.

5. Précurseur de composition adhésive durcissable selon l'une quelconque des revendications précédentes, dans lequel l'au moins un hydrate de sel métallique est choisi parmi un nitrate de calcium, nitrate de magnésium, triflate de calcium, thiosulfate de sodium, thiosulfate de potassium et toutes combinaisons de ceux-ci.

6. Précurseur de composition adhésive durcissable selon l'une quelconque des revendications précédentes, dans lequel l'au moins un hydrate de sel métallique est choisi parmi un nitrate de calcium et un thiosulfate de sodium.

7. Précurseur de composition adhésive durcissable selon l'une quelconque des revendications précédentes, dans lequel l'au moins un composé phosphonate et un composé phosphosilicate sont choisis parmi des sels de potassium, sels de sodium, sels de magnésium, sels de strontium, sels de calcium, de préférence parmi des sels de magnésium, sels de strontium, sels de calcium, et plus préférablement parmi des sels de magnésium et des sels de strontium.

8. Précurseur de composition adhésive durcissable selon l'une quelconque des revendications précédentes, dans lequel l'au moins un premier modificateur d'impact est choisi parmi les modificateurs d'impact de type cœur-écorce, de préférence parmi des caoutchoucs type cœur-écorce.

9. Précurseur de composition adhésive durcissable selon l'une quelconque des revendications précédentes, dans lequel l'au moins un second modificateur d'impact est choisi parmi des modificateurs d'impact de type cœur-écorce et des modificateurs d'impact de type caoutchouc butadiène, et toutes combinaisons et mélanges de ceux-ci.

10. Composition adhésive durcissable selon l'une quelconque des revendications précédentes, dans laquelle l'au moins un premier modificateur d'impact est choisi parmi des modificateurs d'impact de type cœur-écorce, et l'au moins un second modificateur d'impact est choisi parmi des caoutchoucs butadiène ou nitrile.

11. Composition adhésive durcissable, obtenue en combinant la parties (A) et la partie (B) du précurseur adhésif durcissable selon l'une quelconque des revendications précédentes.

12. Procédé de liaison de parties, comprenant les étapes suivantes :
(a) la fourniture d'une composition adhésive selon la revendication 11 ;
(b) l'application de la composition adhésive sur au moins une partie d'une surface d'une première partie ;
(c) l'application d'une seconde partie sur la composition adhésive appliquée à la première partie ;
(d) la réalisation d'une étape de durcissement pour durcir la composition adhésive de manière à assembler par collage de la première partie et de la seconde partie.

13. Procédé selon la revendication 12, dans lequel le métal est choisi parmi un acier, aluminium, magnésium, titane, zinc et toutes combinaisons et alliages de ceux-ci, de préférence parmi un aluminium et un acier, et plus préférablement parmi un aluminium et ses alliages.

14. Procédé selon la revendication 12 ou la revendication 13, dans lequel le procédé comprend une étape de durcissement supplémentaire avant l'étape de durcissement (d) à une température inférieure à celle de l'étape de durcissement (d), de préférence dans lequel le durcissement dans l'étape de durcissement supplémentaire est réalisé au moyen d'un durcissement par induction.

15. Utilisation du précurseur de composition adhésive durcissable selon l'une quelconque des revendications 1 à 10 ou de la composition adhésive durcissable selon la revendication 11 pour le collage des parties, de préférence le collage des parties métalliques dans une opération de fabrication dans l'industrie automobile.
